# EUROPEAN PATENT APPLICATION

(11) **EP 2 807 916 A1**
(43) Date of publication of application: **03.12.2014**
(21) Application number: 14168141.1
(22) Date of filing: 13.05.2014
(51) Int. Cl.: A01G 1/04

(54) **Device and method for aerating compost**

(30) Priority: 27.05.2013 NL 2010868
(71) Applicant: Hooijmans Compost B.V., 5331 LG Kerkdriel (NL)
(72) Inventor: Christiaens, Petrus Gerardus Arnoldus Maria, 5962 NX Horst (NL)
(74) Representative: Patentwerk B.V.

(57) **Abstract**

The present invention relates to a device (1) for aerating compost, particularly compost and/or substrates for the cultivation of mushrooms and other fungi, comprising: a container (2) comprising a floor (3) surrounded by walls (4, 5, 6, 7) for holding the compost; an air distributing device (9) arranged on or in the floor for distributing air supplied to the air distributing device over the floor surface (10); an air supply device (16) for supplying air to the air distributing device; and a removable, at least air-permeable cover (11) arranged above the air distributing device and extending substantially over the floor surface.

## Description

The present invention relates to a device and method for transport of compost, in particular cooled transport of compost.

Devices for cooled transport of compost are per se known. The European patent EP 1767086 and the European patent application EP 2520159 show examples of containers in which compost can be transported, wherein the compost is transported in cooled state, optionally packaged in for instance plastic. The compost is processed into blocks for this purpose.

Such processing steps - packaging and/or processing the compost into blocks - are steps which are necessary according to the prior art but which do however have the drawback of being relatively expensive or labour-intensive. In the case the blocks are packaged, there also occurs use of and, ultimately, waste of packaging material, which is undesirable from an environmental viewpoint.

It is therefore an object of the present invention to at least partially obviate the above stated drawbacks or to provide a useful alternative to the prior art.

Proposed for this purpose according to the present invention is a device for transporting compost, particularly compost and/or substrates for the cultivation of mushrooms and other fungi, comprising a container, which container in turn comprises a floor surrounded by walls, for holding the compost, provided with an air distributing device arranged on or in the floor for the purpose of distributing air supplied to the air distributing device over the floor surface, an air supply device for supplying air to the air distributing device, and a removable, at least air-permeable cover arranged above the air distributing device and extending substantially over the floor surface.

In contrast to what is usual in the prior art, the device according to the invention, which can for instance be formed by a container such as a standard so-called Reefer container having a length of 20 or 40 ft, is not filled with compost optionally packaged and/or divided into blocks but with compost in bulk form which is arranged on the cover.

The compost is then conditioned by carrying air supplied by the air supply device via the air distributing device through the cover.

The air distributing chamber can be formed by baffles or profile parts provided in, on or above the floor for the purpose of guiding and distributing the air. In an embodiment profile parts, for instance aluminium profile parts, are arranged on an existing floor of a container in order to thus form an air distribution chamber.

The air-permeable cover can be formed in different ways. In a first embodiment it comprises a rigid cover formed for instance by one or more gratings or planks. The gratings or planks must then be embodied and/or arranged such that the compost cannot pass therethrough. When use is made of gratings or planks, they can be displaceable outward (optionally one by one) in order to unload compost.

In a preferred embodiment however, the air-permeable cover comprises a flexible cover such as a mat, mesh or web or a perforated conveyor belt which is also fine-meshed such that the compost cannot pass therethrough. A flexible cover is easier to place and store than a rigid cover and - as will be elucidated below - also forms the basis for further logistical advantages.

In a preferred embodiment the flexible cover is displaceable, i.e. the relative position of the flexible cover in respect of the container, and particularly the floor thereof, can be changed. This displacement can preferably take place in automated manner by means of an actuator such as an electric motor.

In a further embodiment the flexible cover is attached at least at one outer end to a roll, or a winding mandrel is provided there for this purpose. This roll is particularly located inside the container, and more particularly on a side of the container remote from an opening, such as that of a door. The cover can in this way be arranged over a desired part of the air distributing device and/or be extended beyond the surface thereof. Use can be made hereof during the arranging and discharging of compost. When the cover is moved outside the container, the compost can either drop off of its own accord onto a surface arranged for the purpose, such as a receptacle or a conveyor, or it can be removed from the cover.

It is advantageous here for the flexible cover to also be attached to such a roll at a second outer end so that the flexible cover can be rolled up neatly. This can take place automatically, for which purpose at least one roll can be drivable. In another embodiment the cover is provided with a winch for automated displacement of the cover.

In yet another embodiment the device comprises an air feedback for feeding air from the container back to the air supply device. This can also be provided with a cooling device for cooling the air to be supplied. In a practical realization the fed-back air is cooled and then fed back to the air distributing device. The cooling can be provided with an actuating control for bringing the compost to a desired temperature or holding the compost at a desired temperature.

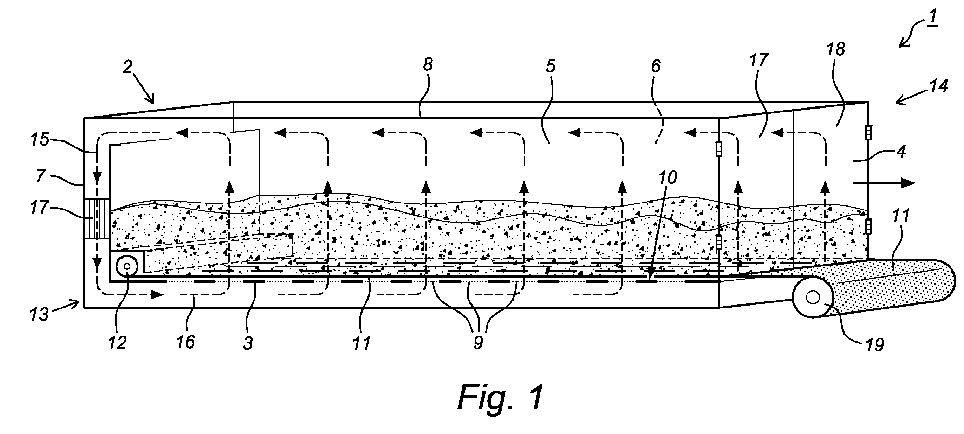

The invention will now be elucidated with reference to the figure, which shows a perspective cut-away view of a device according to the invention.

The figure shows a device 1 for transporting compost, comprising a container 2 which comprises a floor 3 surrounded by walls 4, 5, 6, 7 for holding the compost, and an upper side or roof 8. Arranged on floor 3 is an air distributing device 9 for distributing air over floor surface 10. The device also comprises a removable, at least air-permeable cover 11 I arranged above air distributing device 9 and extending substantially over floor surface 10.

In the shown embodiment the air-permeable cover 11 is a flexible cover such as a mat, mesh or web, this flexible cover being displaceable in automated manner. For this purpose it is attached to a drivable roll 12 at a first outer end 13 and also attached to a roll 19 at a second outer end 14. As can be seen, cover 11 extends at least partially beyond the floor surface. Also shown is an air feedback 15 for feeding air from the container back to air supply device 16. Finally, the figure shows a cooling device 17 for cooling the air to be supplied.

During use compost is arranged on the cover and air, which is pre-cooled, is carried through the cover from the floor side.

It is possible to supply compost to or discharge it from the container by means of displacing the cover, but it is also possible for the purpose of supplying compost to opt to dispose the device at an incline and to fill it to a predetermined level via doors 17 and 18.

Many variants which all fall within the scope of protection of the following claims can be envisaged in addition to the shown embodiment.

## Claims

1. Device for transporting compost, particularly compost and/or substrates, such as compost or culture substrates for the cultivation of mushrooms and other fungi, comprising:
- A container, such as a reefer container, comprising a floor surrounded by walls, for holding the compost;
- An air distributing device arranged on or in the floor for distributing air supplied to the air distributing device over the floor surface;
- An air supply device for supplying air to the air distributing device;
- A removable, at least air-permeable cover arranged above the air distributing device and extending substantially over the floor surface.

2. Device as claimed in claim 1, wherein the air distributing chamber comprises baffles or profile parts provided in, on or above the floor for the purpose of guiding the air.

3. Device as claimed in claim 1 or 2, wherein the air-permeable cover comprises a rigid cover, such as one or more gratings or planks.

4. Device as claimed in claim 1 or 2, wherein the air-permeable cover is a flexible cover such as a mat, mesh or web.

5. Device as claimed in claim 4, wherein the flexible cover is displaceable in automated manner.

6. Device as claimed in claim 5, wherein the flexible cover is attached at least at one outer end to a roll.

7. Device as claimed in claim 6, wherein the flexible cover is also attached at a second outer end to a roll.

8. Device as claimed in claim 6 or 7, wherein at least one roll is drivable.

9. Device as claimed in any of the foregoing claims, wherein the cover extends at least partially beyond the floor surface.

10. Device as claimed in claim 6, comprising a winch provided for automated displacement of the cover.

11. Device as claimed in any of the foregoing claims, comprising an air feedback for feeding air from the container back to the air supply device.

12. Device as claimed in any of the foregoing claims, comprising a cooling device for cooling the air to be supplied.

13. Method for transporting compost, particularly compost and/or substrates for the cultivation of mushrooms and other fungi, comprising of arranging compost on the cover of a device as claimed in any of the foregoing claims and carrying air from the floor side through the cover.

14. Method as claimed in claim 13, comprising of cooling the air before it is carried through the cover.

15. Method as claimed in claim 13 or 14, comprising of supplying compost to or discharging it from the container by means of displacing the cover.
